(19) Europäisches Patentamt / European Patent Office / Office européen des brevets

(11) **EP 4 032 271 B1**

(12) **EUROPEAN PATENT SPECIFICATION**

(45) Date of publication and mention of the grant of the patent:
**09.04.2025 Bulletin 2025/15**

(21) Application number: **20765041.7**

(22) Date of filing: **08.09.2020**

(51) International Patent Classification (IPC):
$H04N\ 19/12^{(2014.01)}$     $H04N\ 19/159^{(2014.01)}$
$H04N\ 19/18^{(2014.01)}$     $H04N\ 19/61^{(2014.01)}$

(52) Cooperative Patent Classification (CPC):
**H04N 19/61; H04N 19/12; H04N 19/159; H04N 19/18**

(86) International application number:
**PCT/EP2020/074998**

(87) International publication number:
**WO 2021/052804 (25.03.2021 Gazette 2021/12)**

(54) **SECONDARY TRANSFORM FOR FAST VIDEO ENCODER**

**SEKUNDÄRTRANSFORMATION FÜR EINEN SCHNELLEN VIDEOCODIERER**

**TRANSFORMÉE SECONDAIRE POUR CODEUR VIDÉO RAPIDE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2019 EP 19306111**
**30.09.2019 EP 19306233**

(43) Date of publication of application:
**27.07.2022 Bulletin 2022/30**

(60) Divisional application:
**25161655.3**

(73) Proprietor: **InterDigital CE Patent Holdings, SAS**
**75017 Paris (FR)**

(72) Inventors:
• **NASER, Karam**
**35576 Cesson-Sévigné (FR)**
• **POIRIER, Tangi**
**35576 Cesson-Sévigné (FR)**
• **GALPIN, Franck**
**35576 Cesson-Sévigné (FR)**
• **CHEN, Ya**
**35576 Cesson-Sévigné (FR)**
• **DUMAS, Thierry**
**35576 Cesson-Sévigné (FR)**

(74) Representative: **Interdigital**
**Immeuble ZEN 2**
**845 A, avenue des Champs Blancs**
**35510 Cesson-Sévigné (FR)**

(56) References cited:
• **M-S CHIANG ET AL: "CE6-related: Simplifications for LFNST", no. JVET-O0292, 25 June 2019 (2019-06-25), XP030219133, Retrieved from the Internet <URL:http://phenix.int-evry.fr/jvet/doc_end_user/documents/15_Gothenburg/wg11/JVET-O0292-v1.zip JVET-O0292-v1.docx> [retrieved on 20190625]**
• **LAINEMA (NOKIA) J: "CE6-related: LFNST with one mode", no. m48468, 25 June 2019 (2019-06-25), XP030222079, Retrieved from the Internet <URL:http://phenix.int-evry.fr/mpeg/doc_end_user/documents/127_Gothenburg/wg11/m48468-JVET-O0350-v1-JVET-O0350.zip JVET-O0350.docx> [retrieved on 20190625]**
• **PFAFF (FRAUNHOFER) J ET AL: "Non-CE3: Harmonization of 8-Bit MIP with Unified-MPM and LFNST", no. JVET-O0485, 1 July 2019 (2019-07-01), XP030219703, Retrieved from the Internet <URL:http://phenix.int-evry.fr/jvet/doc_end_user/documents/15_Gothenburg/wg11/JVET-O0485-v2.zip JVET-O0485-v2/JVET-O0485-v2.docx> [retrieved on 20190701]**

- KARAM NASER (INTERDIGITAL) ET AL: "CE6 Related: MIP Adaptation On Top of CE6-1.1d", no. JVET-P0349, 24 September 2019 (2019-09-24), XP030217022, Retrieved from the Internet <URL:http://phenix.int-evry.fr/jvet/doc_end_user/documents/16_Geneva/wg11/JVET-P0349-v1.zip JVET-P0349.docx> [retrieved on 20190924]
- NASER (INTERDIGITAL) K ET AL: "CE6 Related: Modified LFNST Index Coding For Fast Encoder Implementation", no. JVET-P0350, 6 October 2019 (2019-10-06), XP030217026, Retrieved from the Internet <URL:http://phenix.int-evry.fr/jvet/doc_end_user/documents/16_Geneva/wg11/JVET-P0350-v4.zip JVET-P0350-r3.docx> [retrieved on 20191006]
- KARAM NASER (INTERDIGITAL) ET AL: "CE6 Related: Modified LFNST Index Coding For Fast Encoder Implementation", no. m50317, 24 September 2019 (2019-09-24), XP030206355, Retrieved from the Internet <URL:http://phenix.int-evry.fr/mpeg/doc_end_user/documents/128_Geneva/wg11/m50317-JVET-P0350-v1-JVET-P0350.zip JVET-P0350.docx> [retrieved on 20190924]

**Description**

TECHNICAL FIELD

At least one of the present embodiments generally relates to the field of video compression. At least one embodiment particularly aims at encoding and usage of secondary transform for video encoding.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

M-S CHIANG ET AL: "CE6-related: Simplifications for LFNST", 15. JVET MEETING; 20190703 - 20190712; GOTHENBURG; (THE JOINT VIDEO EXPLORATION TEAM OF ISO/IEC JTC1/ SC29/WG11 AND ITU-T SG.16 ), , no. JVET-O0292 25 June 2019, provides for state of the art LFNST coding.

SUMMARY

One or more of the present embodiments provide signaling and encoding low-frequency non-separable transform (LFNST), such that fast encoder method is supported as well as the traditional rate distortion (RD) search.

The invention is defined by the claims annexed hereto. It is only the third embodiment that falls under the scope of protection, the other embodiments are to be considered exemplary, unclaimed, alternative implementations.

BRIEF DESCRIPTION OF THE DRAWINGS

FIG. 1 illustrates a block diagram of an example of video encoder 100, such as a High Efficiency Video Coding (HEVC) encoder.

FIG. 2 illustrates a block diagram of an example of video decoder 200, such as an HEVC decoder.

FIG. 3 illustrates a block diagram of an example of a system in which various aspects and embodiments are implemented.

FIG. 4 illustrates the specification change corresponding to a first embodiment.

FIG. 5 illustrates an example of algorithm for pairing the MIP weight matrices according to a second embodiment.

FIG. 6 illustrates the specification change corresponding to a third embodiment.

FIG. 7 illustrates an example encoding method according to the third embodiment.

FIG. 8 illustrates the specification change corresponding to a fourth embodiment.

DETAILED DESCRIPTION

Various methods described in this application are based on signaling and encoding low-frequency non-separable transform (LFNST), such that fast encoder method is supported as well as the traditional rate distortion (RD) search. This allows more flexibility to the encoder to adapt its coding search to its computational capacity.

Moreover, the present aspects, although describing principles related to particular drafts of VVC (Versatile Video Coding) or to HEVC (High Efficiency Video Coding) specifications, are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

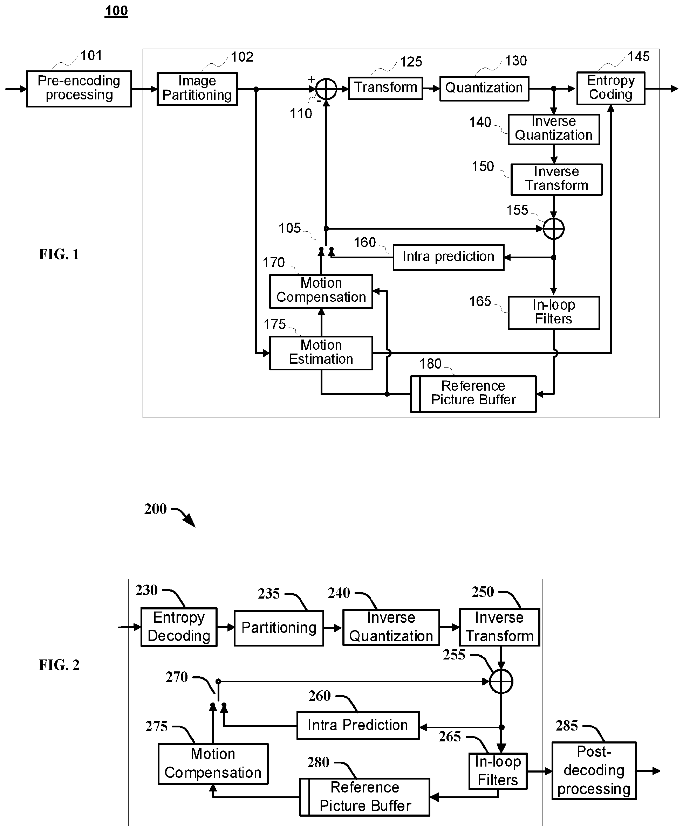

**FIG. 1** illustrates block diagram of an example of video encoder 100, such as a HEVC encoder. FIG. 1 may also illustrate an encoder in which improvements are made to the HEVC standard or an encoder employing technologies similar to HEVC, such as a JEM (Joint Exploration Model) encoder under development by JVET (Joint Video Exploration Team) for VVC.

Before being encoded, the video sequence can go through pre-encoding processing (101). This is for example performed by applying a color transform to the input color picture (for example, conversion from RGB 4:4:4 to YCbCr 4:2:0) or performing a remapping of the input picture components in order to get a signal distribution more resilient to compression (for instance using a histogram equalization of one of the color components). Metadata can be associated with the pre-processing and attached to the bitstream.

In HEVC, to encode a video sequence with one or more pictures, a picture is partitioned (102) into one or more slices where each slice can include one or more slice segments. A slice segment is organized into coding units, prediction units, and transform units. The HEVC specification distinguishes between "blocks" and "units," where a "block" addresses a specific area in a sample array (for example, luma, Y), and the "unit" includes the collocated blocks of all encoded color components (Y, Cb, Cr, or monochrome), syntax elements, and prediction data that are associated with the blocks (for example, motion vectors).

For coding in HEVC, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes.

In the example of encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar, and 33 angular prediction modes. The intra prediction reference is reconstructed from the row and column adjacent to the current block. The reference extends over two times the block size in the horizontal and vertical directions using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of six most probable modes (MPM), the mode is signaled by an index in the MPM list. Otherwise, the mode is signaled by a fixed-length binarization of the mode index. The six most probable modes are derived from the intra prediction modes of the top and left neighboring blocks (see table 1 below).

Table 1

| Conditions | | MPM[0] | MPM[1] | MPM[2] | MPM[3] | MPM[4] | MPM[5] |
|---|---|---|---|---|---|---|---|
| L=A | L≠PLANAR_IDX and L#DC_IDX | PLANAR_IDX | L | L-1 | L+1 | DC_IDX | L-2 |
| | Otherwise | PLANAR_IDX | DC_IDX | VER_IDX | HOR_IDX | VER_IDX-4 | VER_IDX+4 |

(continued)

| Conditions | | | MPM[0] | MPM[1] | MPM[2] | MPM[3] | MPM[4] | MPM[5] |
|---|---|---|---|---|---|---|---|---|
| L≠A | L > DC_IDX and A > DC_IDX | | PLANAR_IDX | L | A | DC_IDX | Max(L,-A)-2, if L and A are adjacent else max(L,-A)-1 | Max(L,A)+ 2, if L and A are adjacent else max(L,A)+1 |
| | Otherwise | L+A>=2 | PLANAR_IDX | Max(L,A) | DC_IDX | Max(L,-A)-1 | Max(L,A)+1 | Max(L,A)- 2 |
| | | otherwise | PLANAR_IDX | DC_IDX | VER_IDX | HOR_IDX | VER_IDX-4 | VER_IDX+4 |

For an inter CU, The motion information (for example, motion vector and reference picture index) can be signaled in multiple methods, for example "merge mode" or "advanced motion vector prediction (AMVP)".

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the CU syntax for AMVP.

The prediction residuals are then transformed (125) and quantized (130), including at least one embodiment for adapting the chroma quantization parameter described below. The transforms are generally based on separable transforms, and are known as 'primary' transforms. For instance, a DCT transform is first applied in the horizontal direction, then in the vertical direction. In recent codecs such as the JEM, the transforms used in both directions may differ (for example, DCT in one direction, DST in the other one), which leads to a wide variety of 2D transforms, while in previous codecs, the variety of 2D transforms for a given block size is usually limited.

The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, that is, the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 2 illustrates a block diagram of an example of video decoder 200, such as an HEVC decoder. In the example of decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a JEM decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) including at least one embodiment for adapting the chroma quantization parameter described below and inverse transformed (250) to decode the prediction residuals.

Combining (255) the decoded prediction residuals and the predicted block, an image block is reconstructed. The predicted block may be obtained (270) from intra prediction (260) or motion-compensated prediction (that is, inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

The decoded picture can further go through post-decoding processing (285), for example, an inverse color transform (for example conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

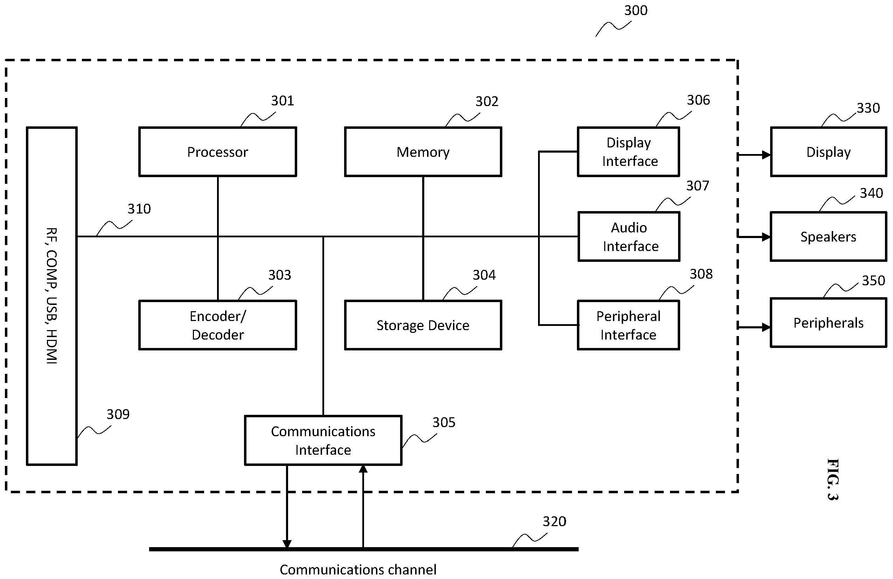

**FIG. 3** illustrates a block diagram of an example of a system in which various aspects and embodiments are implemented. System 300 can be embodied as a device including the various components described below and is configured to perform one or more of the aspects described in this application. Examples of such devices include, but are not limited to, various electronic devices such as personal computers, laptop computers, smartphones, tablet computers, digital multimedia set top boxes, digital television receivers, personal video recording systems, connected home appliances, encoders, transcoders, and servers. Elements of system 300, singly or in combination, can be embodied in a single integrated circuit, multiple ICs, and/or discrete components. For example, in at least one embodiment, the processing and encoder/decoder elements of system 300 are distributed across multiple ICs and/or discrete components. In various embodiments, the elements of system 300 are communicatively coupled through an internal bus 310. In various embodiments, the system 300 is communicatively coupled to other similar systems, or to other electronic devices, via, for example, a communications bus or through dedicated input and/or output ports. In various embodiments, the system 300 is configured to implement one or more of the aspects described in this document, such as the video encoder 100 and video decoder 200 described above and modified as described below.

The system 300 includes at least one processor 301 configured to execute instructions loaded therein for implementing, for example, the various aspects described in this document. Processor 301 can include embedded memory, input output interface, and various other circuitries as known in the art. The system 300 includes at least one memory 302 (e.g., a volatile memory device, and/or a non-volatile memory device). System 300 includes a storage device 304, which can include non-volatile memory and/or volatile memory, including, but not limited to, EEPROM, ROM, PROM, RAM, DRAM, SRAM, flash, magnetic disk drive, and/or optical disk drive. The storage device 304 can include an internal storage device, an attached storage device, and/or a network accessible storage device, as non-limiting examples.

System 300 includes an encoder/decoder module 303 configured, for example, to process data to provide an encoded video or decoded video, and the encoder/decoder module 303 can include its own processor and memory. The encoder/decoder module 303 represents module(s) that can be included in a device to perform the encoding and/or decoding functions. As is known, a device can include one or both of the encoding and decoding modules. Additionally, encoder/decoder module 303 can be implemented as a separate element of system 300 or can be incorporated within processor 301 as a combination of hardware and software as known to those skilled in the art.

Program code to be loaded onto processor 301 or encoder/decoder 303 to perform the various aspects described in this document can be stored in storage device 304 and subsequently loaded onto memory 302 for execution by processor 301. In accordance with various embodiments, one or more of processor 301, memory 302, storage device 304, and encoder/decoder module 303 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 301 and/or the encoder/decoder module 303 is used to store instructions and to provide working memory for processing that is needed during encoding or decoding. In other embodiments, however, a memory external to the processing device (for example, the processing device can be either the processor 301 or the encoder/decoder module 303) is used for one or more of these functions. The external memory can be the memory 302 and/or the storage device 304, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 300 can be provided through various input devices as indicated in block 309. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 309 have associated respective input processing elements as known in the art. For example, the RF portion can be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 300 to other electronic devices across USB and/or HDMI connections. It is to be understood that various aspects of input processing, for example, Reed-Solomon error correction, can be implemented, for example, within a separate input processing IC or within processor 301 as necessary. Similarly, aspects of USB or HDMI interface processing can be implemented within separate interface ICs or within processor 301 as necessary. The demodulated, error corrected, and demultiplexed stream is provided to various processing elements, including, for example, processor 301, and encoder/decoder 303 operating in combination with the memory and storage elements to process the data-stream as necessary for presentation on an output device.

Various elements of system 300 can be provided within an integrated housing, Within the integrated housing, the various elements can be interconnected and transmit data therebetween using suitable connection arrangement, for example, an internal bus as known in the art, including the I2C bus, wiring, and printed circuit boards.

The system 300 includes communication interface 305 that enables communication with other devices via communication channel 320. The communication interface 305 can include, but is not limited to, a transceiver configured to transmit and to receive data over communication channel 320. The communication interface 305 can include, but is not limited to, a modem or network card and the communication channel 320 can be implemented, for example, within a wired and/or a wireless medium.

Data is streamed to the system 300, in various embodiments, using a Wi-Fi network such as IEEE 802.11. The Wi-Fi signal of these embodiments is received over the communications channel 320 and the communications interface 305 which are adapted for Wi-Fi communications. The communications channel 320 of these embodiments is typically connected to an access point or router that provides access to outside networks including the Internet for allowing streaming applications and other over-the-top communications. Other embodiments provide streamed data to the system 300 using a set-top box that delivers the data over the HDMI connection of the input block 309. Still other embodiments provide streamed data to the system 300 using the RF connection of the input block 309.

The system 300 can provide an output signal to various output devices, including a display 330, speakers 340, and other peripheral devices 350. The other peripheral devices 350 include, in various examples of embodiments, one or more of a stand-alone DVR, a disk player, a stereo system, a lighting system, and other devices that provide a function based on the output of the system 300. In various embodiments, control signals are communicated between the system 300 and the display 330, speakers 340, or other peripheral devices 350 using signaling such as AV.Link, CEC, or other communications protocols that enable device-to-device control with or without user intervention. The output devices can be communicatively coupled to system 300 via dedicated connections through respective interfaces 306, 307, and 308. Alternatively, the output devices can be connected to system 300 using the communications channel 320 via the communications interface 305. The display 330 and speakers 340 can be integrated in a single unit with the other components of system 300 in an electronic device such as, for example, a television. In various embodiments, the display interface 306 includes a display driver, such as, for example, a timing controller (T Con) chip.

The display 330 and speaker 340 can alternatively be separate from one or more of the other components, for example, if the RF portion of input 309 is part of a separate set-top box. In various embodiments in which the display 330 and speakers 340 are external components, the output signal can be provided via dedicated output connections, including, for example, HDMI ports, USB ports, or COMP outputs. The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In addition to the primary transform introduced earlier, a so-called low-frequency non-separable transform (LFNST) may be applied in some cases on a subset of the transform coefficient issued from the primary transform. LFNST increases the coding efficiency of the video codec. LFNST is a non-separable transform that is performed after the core DCT2 transform in the encoder side, and before the quantization operation. Conventional video codecs, such as VVC for example, may use such secondary transform. It is an intra-coding tool, where the selection of the transform kernel depends on the intra prediction mode. That is, for each prediction mode, two kernels are defined and an index (named "lfnst_idx" in VVC) is coded to indicate which of the two kernels is selected.

lfnst_idx can interpreted in this way: lfnst_idx[ x0 ][ y0 ] specifies whether and which one of the two low frequency non-separable transform kernels in a selected transform set is used. lfnst_idx[ x0 ][ y0 ] equal to 0 specifies that the low frequency non-separable transform is not used.

Therefore, the encoder has three options for the RD search:

1- No LFNST (lfnst_idx=0)
2- First LFNST kernel (lfnst_idx=1)
3- Second LFNST kernel (lfnst_idx=2)

lfnst_idx is coded at the CU level flag. It is composed of two bits, and binarized as shown in Table 2.

Table 2

| lfnst_idx | Code |
|-----------|------|
| 0 | 0 |
| 1 | 10 |
| 2 | 11 |

The first bin, which indicates if LFNST is used, is CABAC coded. However, the second bit that indicates which kernel is used is by-pass coded. The difference between CABAC coding and bypass coding is that bypass fits a probability distribution that the coded bit has equal probability of being one or zero, whereas CABAC coding can adapt itself to the probability distribution according to the coding process. Although bypass coding the second bit may fit the current VVC design, it exhibits coding loss when fast encoder is performed by constantly selecting the first, or second, kernel. For example, a fast encoder would possibly select always the first kernel to reduce the RD checks, which means the second bit lfnst_idx is constantly zero. Such an encoder must always code one bit (zero). In contrast, if this bit is CABAC coded, the CABAC engine will converge to coding this bin with much smaller cost.

Although it brings high coding gain, LFNST leads to significant increase in the encoding time. This is because the encoder performs RD search to select between two transform kernels the optimal one. In a first improvement, a faster encoder may be obtained by using only the first kernel of LFNST. Beside saving the encoder time, this reduces the memory requirement for the encoder as half of the kernels are removed. However, this improvement results in coding losses that are not acceptable. In a second improvement, the transform kernels can be alternated between adjacent intra prediction modes. In this case, one kernel is allowed for each intra prediction mode, so that the encoder performs less RD checks, and all the two transform kernels are still used since they are shared between the intra prediction mode. In these approaches, LFNST index is coded with one bit, with zero indicating no LFNST and one means LFNST was used. For LFNST kernel selection, the following rule is applied:

$$lfnst\_Idx = predModeIntra \% 2$$

This means that if LFNST is one (LFNST index is used), lfnst_Idx is set to zero for even prediction modes (first LFNST kernel is used) and one for odd prediction modes (second LFNST is used). Therefore, one kernel per intra mode is allowed in order to achieve faster RD search at the encoder side. The kernels are distributed between the intra prediction modes such that the loss is reduced as all the kernels are used. However, although the second option is better than the first one, both solutions have the problem that they restrict the flexibility of the encoder and lead to RD loss that cannot be compensated.

The approach presented in this document is two-fold: firstly, it completes the second improvement approach introduced above by proper binarization of matrix intra based-prediction (MIP) modes, and secondly it proposes another LFNST index coding mechanism that allows faster RD search.

In a first embodiment, a first LFNST kernel is used for even MIP modes and a second LFNST kernel is used for odd MIP modes.

For that purpose, the solution used in former improvements cannot be used anymore. Indeed, when MIP is used, predModeIntra is set to planar mode (predModeIntra=INTRA_PLANAR = 0). Therefore, when applying the rule introduced above for selecting the kernels (predModeIntra % 2), the encoder will constantly select the first kernel when the MIP is used. This is certainly not inline with the motivation behind distributing the kernels between prediction modes. Therefore, it is proposed in this invention to do the following: If MIP is used, predModeIntra = predModeIntra % 2. With this improvement, the first LFNST kernel is used for even MIP modes, and the second LFNST kernel is used for odd MIP modes.

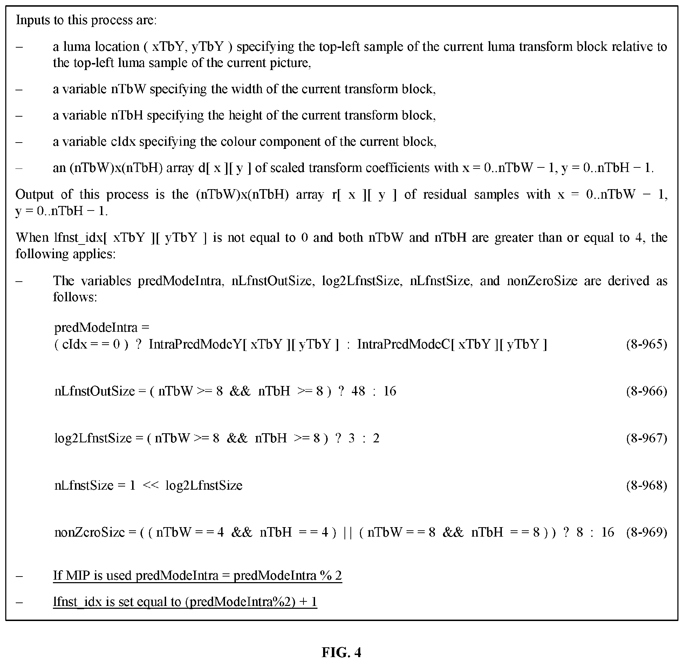

**FIG. 4** illustrates the specification change corresponding to a first embodiment. The changes to VVC specification are indicated below with the changes identified using underlined text.

The same approach can be repeated with the rule lfnst_idx = (IntraPredMode+1)%2+1. In other words, the odd modes use the first kernel and the even modes use the second kernel. With such approach, LFNST kernels are also alternated according to MIP modes, thus reducing the RD loss compared to the use of a single LFNST kernel.

In first embodiment, the same principle is applied in the case of the conventional intra prediction modes and in the case of the MIP modes for the LFNST kernel selection. However, there exists a key difference between the conventional intra prediction modes and the MIP prediction modes. Considering the directional modes with indices in the range [2, 66], two conventional intra prediction modes with successive indices have close directions of propagation. This does not hold in the case of the MIP modes.

Therefore, in a second embodiment, the MIP modes are paired such that the two MIP modes in each pair have close directions of propagation: the first LFNST kernel is used for the first MIP mode in each pair and the second LFNST kernel is used for the second MIP mode in each pair.

To do this pairing, it can be considered that two MIP modes with similar weight matrices have close directions of propagation. First, the algorithm described below determines the pairs of MIP weight matrices for which the sum over all pairs of the Frobenius norm of the matrix difference is minimum. Then, the pairs of MIP modes are determined from the pairs of MIP weight matrices.

This pairing is chosen so that two MIP modes with close matrix of weight are mapped to different LNFST kernels.

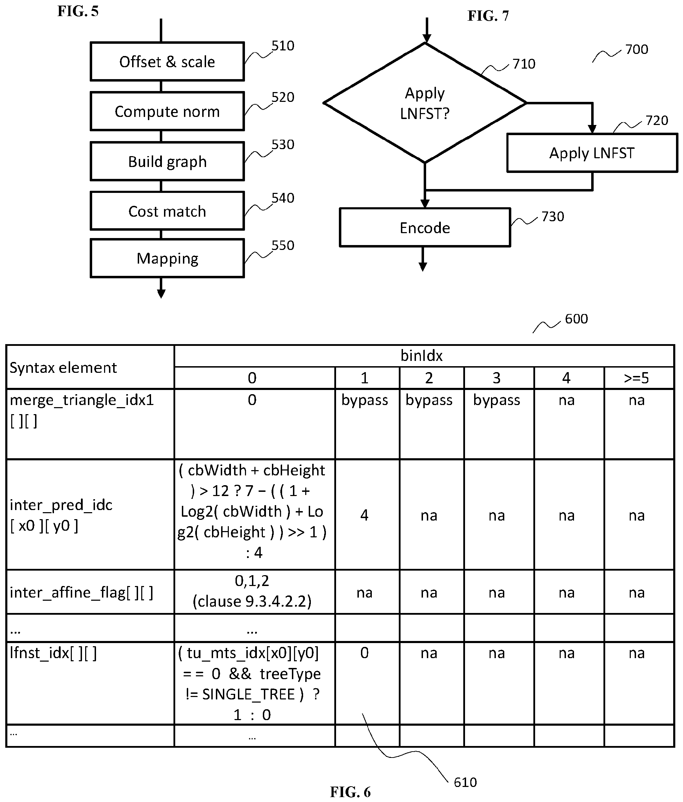

FIG. 5 illustrates an example of algorithm for pairing the MIP modes according to a second embodiment. The same algorithm below is run on the 18 MIP weight matrices for predicting $4 \times 4$ TBs, the 10 MIP weight matrices for predicting $4 \times 8$, $8 \times 4$, and $8 \times 8$ TBs, and the 6 MIP weight matrices for predicting the other TBs.

In step 510, the MIP weight matrices are offset and scaled, for example as following:

$$W^{(k)}[i][j] = \frac{A^{(k)}[i][j] - o^{(k)}}{2^{s^{(k)}}}$$

$A^{(k)}[i][j]$ denotes the coefficient at position $[i, j]$ in the MIP weight matrix $A$ of index $k$. $o^{(k)}$ and $s^{(k)}$ are the offset and the shift of the MIP weight matrix $A^{(k)}$. For instance, for predicting $4 \times 4$ TBs, $k \in [\![0, 17]\!]$.

In step 520, the Frobenius norm of each possible pair of MIP weight matrices is computed, for example as following:

$$n_{kl} = \left\| W^{(k)} - W^{(l)} \right\|_2$$

$n_{kl}$ is the Frobenius norm of the difference between the offset and scaled MIP weight matrix of index $k$, denoted $W^{(k)}$, and the offset and scaled MIP weight matrix of index $l$, denoted $W^{(l)}$. For instance, for predicting $4 \times 4$ TBs, $(k, l) \in ([\![0, 17]\!])^2$.

In step 530, a graph is built in which the vertex of index i corresponds to the MIP weight matrix of index i, and the edge between the vertex of index i and that of index j is the Frobenius norm of the difference between the MIP weight matrix of index i and the MIP weight matrix of index $j$.

In step 540, a minimum cost perfect matching algorithm is applied to this graph, such as the algorithm described by [5] A.M.H. Gerards. Matching. M.O. Ball, T. Magnanti, C. Monma, and G. Nemhauser, editors, Network Models, volume 7 of Handbooks in Operations Research and Management Science, Chapter 3, pages 135-224, Elsevier, 1995 for example.

In result of these steps, the MIP weight matrices are paired. In figures 3 to 5 below, each table column contains a different pair of MIP weight matrices indices while each row contains all the MIP weight matrices indices mapped to the same LFNST kernel.

Table 3 illustrates an example of mapping between each MIP weight matrix index and a LFNST kernel in the case of $4 \times 4$ TBs to be predicted.

Table 3

| 1st LFNST kernel | 0 | 1 | 2 | 3 | 4 | 6 | 7 | 9 | 15 |
|---|---|---|---|---|---|---|---|---|---|

(continued)

| 2nd LFNST kernel | 13 | 11 | 5 | 8 | 10 | 14 | 16 | 12 | 17 |
|---|---|---|---|---|---|---|---|---|---|

Table 4 illustrates an example of mapping between each MIP weight matrix index and a LFNST kernel in the case of 4 × **8**, **8** × **4**, and **8** × **8** TBs to be predicted.

Table 4

| 1st LFNST kernel | 0 | 1 | 2 | 4 | 5 |
|---|---|---|---|---|---|
| 2nd LFNST kernel | 9 | 3 | 6 | 8 | 7 |

Table 5 illustrates an example of mapping between each MIP weight matrix index and a LFNST kernel in the case the prediction of remaining TBs.

Table 5

| 1st LFNST kernel | 0 | 1 | 2 |
|---|---|---|---|
| 2nd LFNST kernel | 4 | 3 | 5 |

In step 550, the pairs of MIP modes are determined by mapping the MIP weight matrices to the pairs of MIP modes. Each MIP matrix is used by two different MIP modes, excluding the MIP matrix of index 0, which is used by the MIP mode of index 0 only. In details, the mapping between the MIP mode idxMode and its MIP weight matrix index k is given by:

$$k = idxMode \text{, if } idxMode \leq nbModes/2$$

$$k = idxMode - nbModes/2 \text{, otherwise} \hspace{3cm} \text{(equation 1)}$$

nbModes denotes the number of MIP modes. For instance, in the case of 4 × 4 TBs, nbModes = 35. For predicting 4 × 8, 8 × 4, and 8 × 8 TBs, nbModes = 19. For predicting the other TBs, nbModes = 11.

From the above mapping and Tables 3, 4, and 5, the pairs of MIP modes can be determined.

In tables 6 to 8 below, each table column contains a different pair of MIP modes indices while each row contains all the MIP modes indices mapped to the same LFNST kernel. In contrary to tables 3 to 5 relative to MIP weight indices, tables 6 to 8 relate to MIP mode indices.

Table 6 illustrates an example of mapping between each MIP mode index and a LFNST kernel in the case of **4 × 4** TBs to be predicted.

Table 6.

| 1st LFNST kernel | 0 | 1 | 2 | 3 | 4 | 6 | 7 | 9 | 15 |
|---|---|---|---|---|---|---|---|---|---|
| 2nd LFNST kernel | 13 | 11 | 5 | 8 | 10 | 14 | 16 | 12 | 17 |
| | | | | | | | | | |
| 1st LFNST kernel | | 18 | 19 | 20 | 21 | 23 | 24 | 26 | 32 |
| 2nd LFNST kernel | 30 | 28 | 22 | 25 | 27 | 31 | 33 | 29 | 34 |

Table 7 illustrates an example of mapping between each MIP mode index and a LFNST kernel in the case of 4 × **8,** **8** × **4,** and **8** × **8** TBs to be predicted.

Table 7

| 1st LFNST kernel | 0 | 1 | 2 | 4 | 5 | 10 | 11 | 13 | 14 |
|---|---|---|---|---|---|---|---|---|---|
| 2nd LFNST kernel | 9 | 3 | 6 | 8 | 7 | 12 | 15 | 17 | 16 |

Table 8 illustrates an example of mapping between each MIP mode index and a LFNST kernel in the case of the prediction of the remaining TBs.

Table 8

| 1st LFNST kernel | 0 | 1 | 2 | 6 | 7 |
|---|---|---|---|---|---|
| 2nd LFNST kernel | 4 | 3 | 5 | 8 | 10 |

In the formula given in equation 1, we can see that apart from the MIP mode index 0, 2 MIP mode indices shared the same MIP weight matrix. Therefore, in each table 6, 7, 8, for each pair, when we determine the corresponding pair using equation 1, there is no mapping possible for MIP mode index 0. Indeed, the second line of equation 1 does not lead to k = 0 and thus does not match a second MIP mode index. For example, in the case of **4 × 4** TBs (table 6), the MIP matrices of index 0 and 13 are close. Thus, the MIP modes of indices should be mapped to two different LNFST kernels. Now, the MIP mode of index 13 and 30 share the same weight matrix. So, the MIP mode of index 30 should be mapped to the same LNFST kernel as the one for the MIP mode of index 13. The MIP mode of index 0 shares its matrix of weight with no other mode. Therefore, the pair involving the MIP mode of index 30 is incomplete. In this case, when the MIP mode index of 30 is selected, we choose the first LNFST kernel.

In a variant, the mappings in tables 6, 7 and 8 are inverted between the 1st LNFST kernel and the 2nd LNFST kernel.

In another variant, the MIP mode index not in pair (e.g. the MIP mode of index 9 in the last case) can use the other LFNST kernel (1st LFNST kernel in this case).

In a third embodiment, the encoder is restricted to not using the second LFNST kernel, and therefore encodes LFNST index as 0 for no LFNST or 1 for the first kernel. In terms of binary code, LFNST is either coded as 0 or 10 (see Table 2 ). This results in the same saving in terms of coding time as in the first embodiment, as the second kernel is never used. However, there is an increase in bitrate due to the coding of extra bit compared to the first embodiment. To compensate for this, it is proposed to benefit from entropy coding here instead of bypass filtering. That is, lfnst_idx second bit is always coded with 0, which costs very few bits when entropy coding is used with proper initialization. The main advantage of this method is that it allows both fast low-complexity encoder, which constantly selects the first kernel, and high complexity encoder that performs RD search to find the best kernel to select.

FIG. 6 illustrates the specification change corresponding to the third embodiment. The table 600 shows the type of coding for the individual binaries. In this table, the second binary of LFNST index is CABAC coded with one index (0). Changes to VVC specification is done in cell 610, now comprising the value "0" instead of "bypass".

FIG. 7 illustrates an example encoding method according to the third embodiment. In this process 700, the encoder decides in step 710, according to RD computations as described previously, if LNFST should be applied. If it is the case, in step 720, LNFST is applied as described previously. Then in step 730, encoding is performed with appropriate signaling as described previously.

To further allow flexibility for the encoder, the entropy coding can be improved by adding more contexts. The encoder may possibly perform different strategy for small block than large blocks. That is, it tests one kernel for small blocks and two kernels for large blocks since small blocks occur more often and requires lots of RD checks. Therefore, index coding can depend on current area, block dimension or etc. However, the simplest way is to be inline with LFNST computations. For example, in the specification text, the following are computed:

$$nLfnstOutSize = ( \; nTbW >= 8 \;\; \&\& \;\; nTbH >= 8 \;) \; ? \; 48 \; : \; 16 \qquad (8\text{-}966)$$

$$log2LfnstSize = ( \; nTbW >= 8 \;\; \&\& \;\; nTbH >= 8 \;) \; ? \; 3 \; : \; 2 \qquad (8\text{-}967)$$

$$nLfnstSize = 1 \; << \; log2LfnstSize \qquad (8\text{-}968)$$

$$nonZeroSize = (( \; nTbW == 4 \;\; \&\& \;\; nTbH == 4) \; || \; (nTbW == 8 \;\; \&\& \;\; nTbH == 8)) \; ? \; 8 : 16 \qquad (8\text{-}969)$$

where nTbW and nTbH are width and height of the current transform block. the It means that the following two conditions are checked:

1)

$$nTbW >= 8 \;\&\&\; nTbH >= 8$$

2)

$$( \text{nTbW} == 4 \text{ \&\& nTbH} == 4) \parallel (\text{nTbW} ==8 \text{ \&\& nTbH}==8)$$

Those two conditions can be utilized as indicators of block dimensions.

In a first variant embodiment, the context is selected as follows:

$$\text{nTbW} >= 8 \text{ \&\& nTbH} >= 8 \ ? \ 0 : 1$$

Thus, this value replaces the "0" value of cell 510 of table 5. This has for effect of selecting different contexts of CABAC coding engine for blocks whose size is greater than 8 x 8 pixels and the second one for smaller blocks.

In a second variant embodiment, the context is selected as follows:

$$(\text{nTbW} == 4 \text{ \&\& nTbH} == 4) \parallel (\text{nTbW} ==8 \text{ \&\& nTbH}==8) \ ? \ 0 : 1$$

Thus, this value replaces the "0" value of cell 510 of table 5. This has for effect of selecting different contexts of CABAC coding engine for square blocks of size 4X4 or 8x8.

Other variants use other combinations of these two variants.

In a fourth embodiment, the encoder alternates the selection of the LNFST kernels so that the kernels are distributed between intra prediction modes when a fast encoder is used, while still using the CABAC coding of LFNST index. This is done through another parsing step. In details, the fast low-complexity encoder always codes LFNST as either 0 or 10 as shown in table 3 and avoids using the coding "11" to reduce RD search like in the third embodiment.

However, the selection of the kernel is altered as the parsing of the index is done as follows:

Table 9

| lfnst_idx | Mapped value |
|-----------|--------------|
| 0 | 0 |
| 1 | predModeIntra %2 ? 1 : 2 |
| 2 | predModeIntra %2 ? 2 : 1 |

This means that for odd intra prediction modes, lfnst_idx is swapped. This is to allow a fast encoder that allows only the first LFNST index to distribute the among the prediction modes.

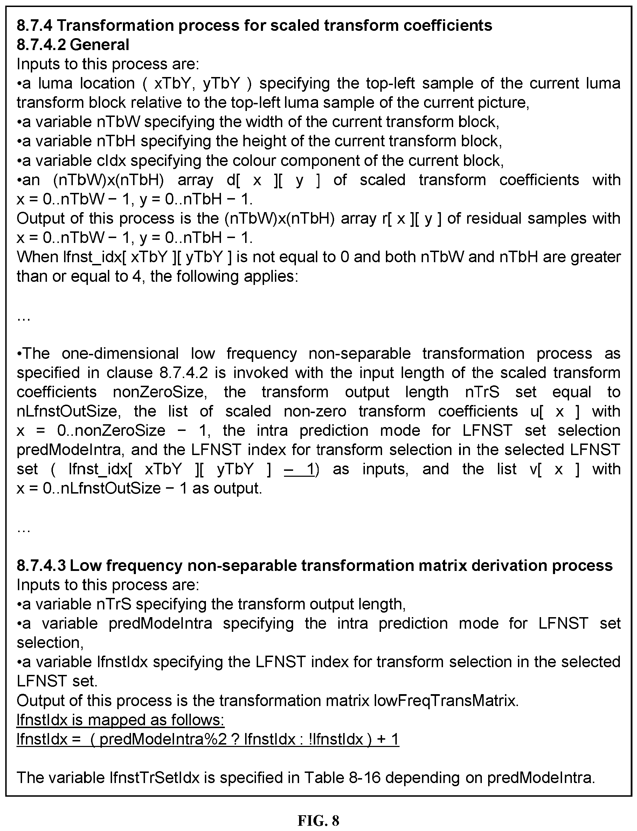

**FIG. 8** illustrates the specification change corresponding to the fourth embodiment. The changes to VVC specification are indicated below with the changes identified using underlined text. The context selection tables from third embodiment can be used.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well. The aspects described and contemplated in this application can be implemented in many different forms. Figures **FIG. 1, FIG. 2** and **FIG. 3** above provide some embodiments, but other embodiments are contemplated, and the discussion of Figures does not limit the breadth of the implementations.

In the present application, the terms "reconstructed" and "decoded" may be used interchangeably, the terms "pixel" and "sample" may be used interchangeably, the terms "image," "picture" and "frame" may be used interchangeably, the terms "index" and "idx" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example regarding block sizes. The specific values are for example purposes and the aspects described are not limited to these specific values.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, moving the information, copying the information, calculating the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory or optical media storage). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for encoding, the method comprising:

    - determining (710) if a low-frequency non-separable transform should be applied to a current block of a picture; and
    - responsive to the determining:

- when no low-frequency non-separable transform should be applied, determining an information representative of the non-application of low-frequency non-separable transform, the information being a one-bit value equal to "0",
- when a low-frequency non-separable transform should be applied, applying (720) the low-frequency non-separable transform on at least one transform coefficient issued from a primary transform applied to the current block and determining an information representative of the low-frequency non-separable transform, the information being a two-bit value equal to "10",
- encoding (730) information representative of the low-frequency non-separable transform using entropy coding, wherein the low-frequency non-separable transform only uses the first kernel in a list of low-frequency non-separable transform kernels.

2. The method of claim 1, wherein an intra prediction mode used for the current block is a matrix intra based-prediction mode.

3. A device (300) for encoding, the device comprising an encoder (303) configured for:

- determining if a low-frequency non-separable transform should be applied to a current block of a picture; and
- responsive to the determining:

- when no low-frequency non-separable transform should be applied, determining an information representative of the non-application of low-frequency non-separable transform, the information being a one-bit value equal to "0",
- when a low-frequency non-separable transform should be applied, applying the low-frequency non-separable transform on at least one transform coefficient issued from a primary transform applied to the current block and determining an information representative of the low-frequency non-separable transform, the information being a two-bit value equal to "10",
- encoding information representative of the low-frequency non-separable transform using entropy coding, wherein the low-frequency non-separable transform only uses the first kernel in a list of low-frequency non-separable transform kernels.

4. The device of claim 3, wherein an intra prediction mode used for the current block is a matrix intra based-prediction mode.

5. A computer program comprising program code instructions for implementing the steps of a method according to claim 1 when executed by a processor.

6. A non-transitory computer readable medium comprising program code instructions for implementing the steps of a method according to claim 1 when executed by a processor.

**Patentansprüche**

1. Verfahren zum Codieren, wobei das Verfahren umfasst:

- Bestimmen (710), ob auf einen gegenwärtigen Block eines Bilds eine nicht trennbare Niederfrequenztransformation angewendet werden sollte; und
- als Reaktion auf das Bestimmen:

- wenn keine nicht trennbare Niederfrequenztransformation angewendet werden sollte, Bestimmen von Informationen, die die Nichtanwendung einer nicht trennbaren Niederfrequenztransformation repräsentieren, wobei die Informationen ein Ein-Bit-Wert gleich "0" sind,
- wenn eine nicht trennbare Niederfrequenztransformation angewendet werden sollte, Anwenden (720) der nicht trennbaren Niederfrequenztransformation auf mindestens einen Transformationskoeffizienten, der von einer auf den gegenwärtigen Block angewendeten primären Transformation ausgegeben wird, und Bestimmen von Informationen, die die nicht trennbare Niederfrequenztransformation repräsentieren, wobei die Informationen ein Zwei-Bit-Wert gleich "10" sind,
- Codieren (730) von Informationen, die die nicht trennbare Niederfrequenztransformation repräsentieren, unter Verwendung einer Entropiecodierung, wobei die nicht trennbare Niederfrequenztransformation nur den ersten Kern in einer Liste von Kernen nicht trennbarer Niederfrequenztransformationen verwendet.

2. Verfahren nach Anspruch 1, wobei eine für den gegenwärtigen Block verwendete Intra-Vorhersagebetriebsart eine Matrixintrabasierte Vorhersagebetriebsart ist.

3. Vorrichtung (300) zum Codieren, wobei die Vorrichtung einen Codierer (303) umfasst, der konfiguriert ist zum:

- Bestimmen, ob auf einen gegenwärtigen Block eines Bilds eine nicht trennbare Niederfrequenztransformation angewendet werden sollte; und
- als Reaktion auf das Bestimmen:

- wenn keine nicht trennbare Niederfrequenztransformation angewendet werden sollte, Bestimmen von Informationen, die die Nichtanwendung einer nicht trennbaren Niederfrequenztransformation repräsentieren, wobei die Informationen ein Ein-Bit-Wert gleich "0" sind,
- wenn eine nicht trennbare Niederfrequenztransformation angewendet werden sollte, Anwenden der nicht trennbaren Niederfrequenztransformation auf mindestens einen Transformationskoeffizienten, der von einer auf den gegenwärtigen Block angewendeten primären Transformation ausgegeben wird, und Bestimmen von Informationen, die die nicht trennbare Niederfrequenztransformation repräsentieren, wobei die Informationen ein Zwei-Bit-Wert gleich "10" sind,
- Codieren von Informationen, die die nicht trennbare Niederfrequenztransformation repräsentieren, unter Verwendung einer Entropiecodierung, wobei die nicht trennbare Niederfrequenztransformation nur den ersten Kern in einer Liste von Kernen nicht trennbarer Niederfrequenztransformationen verwendet.

4. Vorrichtung nach Anspruch 3, wobei eine für den gegenwärtigen Block verwendete Intra-Vorhersagebetriebsart eine Matrixintrabasierte Vorhersagebetriebsart ist.

5. Computerprogramm, das Programmcodeanweisungen umfasst, um, wenn sie durch einen Prozessor ausgeführt werden, die Schritte eines Verfahrens nach Anspruch 1 zu implementieren.

6. Nichttransitorisches computerlesbares Medium, das Programmcodeanweisungen umfasst, um, wenn sie durch einen Prozessor ausgeführt werden, die Schritte eines Verfahrens nach Anspruch 1 zu implementieren.

**Revendications**

1. Procédé de codage, le procédé comprenant :

- la détermination (710) de l'application ou non d'une transformée non séparable à basse fréquence à un bloc courant d'une image, et
- en réponse à la détermination :

- lorsqu'aucune transformée non séparable à basse fréquence ne doit être appliquée, la détermination d'une information représentative de la non-application de la transformée non séparable à basse fréquence, l'information étant une valeur d'un bit égale à « 0 »,
- lorsqu'une transformation non séparable à basse fréquence doit être appliquée, l'application (720) de la transformée non séparable à basse fréquence à au moins un coefficient de transformée issu d'une transformée primaire appliquée au bloc courant et la détermination d'une information représentative de la transformée non séparable à basse fréquence, l'information étant une valeur de deux bits égale à « 10 »,
- le codage (730) d'informations représentatives de la transformée non séparable à basse fréquence à l'aide d'un codage entropique, la transformée non séparable à basse fréquence n'utilisant que le premier noyau d'une liste de noyaux de transformée non séparable à basse fréquence.

2. Procédé selon la revendication 1, dans lequel un mode de prédiction intra utilisé pour le bloc courant est un mode de prédiction intra basé sur une matrice.

3. Dispositif (300) de codage, le dispositif comprenant un encodeur (303) configuré pour :

- déterminer si une transformée non séparable à basse fréquence doit être appliquée à un bloc courant d'une image ; et
- en réponse à la détermination :

- lorsqu'aucune transformée non séparable à basse fréquence ne doit être appliquée, déterminer une information représentative de la non-application de la transformée non séparable à basse fréquence, l'information étant une valeur d'un bit égale à « 0 »,
- lorsqu'une transformation non séparable à basse fréquence doit être appliquée, appliquer la transformée non séparable à basse fréquence à au moins un coefficient de transformée issu d'une transformée primaire appliquée au bloc courant et la détermination d'une information représentative de la transformée non séparable à basse fréquence, l'information étant une valeur de deux bits égale à « 10 »,
- coder des informations représentatives de la transformée non séparable à basse fréquence à l'aide d'un codage entropique, la transformée non séparable à basse fréquence n'utilisant que le premier noyau d'une liste de noyaux de transformée non séparable à basse fréquence.

4. Dispositif selon la revendication 3, dans lequel un mode de prédiction intra utilisé pour le bloc courant est un mode de prédiction intra basé sur une matrice.

5. Programme informatique comprenant des instructions de code de programme pour la mise en œuvre des étapes d'un procédé selon la revendication 1 lorsqu'elles sont exécutées par un processeur.

6. Support non transitoire lisible par ordinateur comprenant des instructions de code de programme pour la mise en œuvre des étapes d'un procédé selon la revendication 1, lorsqu'elles sont exécutées par un processeur.

**100**

**FIG. 1**

**200**

**FIG. 2**

FIG. 3

Inputs to this process are:

–     a luma location ( xTbY, yTbY ) specifying the top-left sample of the current luma transform block relative to the top-left luma sample of the current picture,

–     a variable nTbW specifying the width of the current transform block,

–     a variable nTbH specifying the height of the current transform block,

–     a variable cIdx specifying the colour component of the current block,

–     an (nTbW)x(nTbH) array d[ x ][ y ] of scaled transform coefficients with x = 0..nTbW − 1, y = 0..nTbH − 1.

Output of this process is the (nTbW)x(nTbH) array r[ x ][ y ] of residual samples with x = 0..nTbW − 1, y = 0..nTbH − 1.

When lfnst_idx[ xTbY ][ yTbY ] is not equal to 0 and both nTbW and nTbH are greater than or equal to 4, the following applies:

–     The variables predModeIntra, nLfnstOutSize, log2LfnstSize, nLfnstSize, and nonZeroSize are derived as follows:

$$predModeIntra = ( cIdx == 0 ) \ ? \ IntraPredModeY[ xTbY ][ yTbY ] \ : \ IntraPredModeC[ xTbY ][ yTbY ] \qquad (8\text{-}965)$$

$$nLfnstOutSize = ( nTbW >= 8 \ \&\& \ nTbH >= 8 ) \ ? \ 48 \ : \ 16 \qquad (8\text{-}966)$$

$$log2LfnstSize = ( nTbW >= 8 \ \&\& \ nTbH >= 8 ) \ ? \ 3 \ : \ 2 \qquad (8\text{-}967)$$

$$nLfnstSize = 1 \ << \ log2LfnstSize \qquad (8\text{-}968)$$

$$nonZeroSize = ( ( nTbW == 4 \ \&\& \ nTbH == 4 ) \ || \ ( nTbW == 8 \ \&\& \ nTbH == 8 ) ) \ ? \ 8 \ : \ 16 \qquad (8\text{-}969)$$

–     <u>If MIP is used predModeIntra = predModeIntra % 2</u>

–     <u>lfnst_idx is set equal to (predModeIntra%2) + 1</u>

**FIG. 4**

**FIG. 5**

| Offset & scale | 510 |
| Compute norm | 520 |
| Build graph | 530 |
| Cost match | 540 |
| Mapping | 550 |

**FIG. 7**

700

710 Apply LNFST?

720 Apply LNFST

730 Encode

600

| Syntax element | binIdx | | | | | |
|---|---|---|---|---|---|---|
| | 0 | 1 | 2 | 3 | 4 | >=5 |
| merge_triangle_idx1 [ ][ ] | 0 | bypass | bypass | bypass | na | na |
| inter_pred_idc [ x0 ][ y0 ] | ( cbWidth + cbHeight ) > 12 ? 7 − ( ( 1 + Log2( cbWidth ) + Log2( cbHeight ) ) >> 1 ) : 4 | 4 | na | na | na | na |
| inter_affine_flag[ ][ ] | 0,1,2 (clause 9.3.4.2.2) | na | na | na | na | na |
| ... | ... | | | | | |
| lfnst_idx[ ][ ] | ( tu_mts_idx[x0][y0] == 0 && treeType != SINGLE_TREE ) ? 1 : 0 | 0 | na | na | na | na |
| ... | ... | | | | | |

610

**FIG. 6**

**8.7.4 Transformation process for scaled transform coefficients**

**8.7.4.2 General**

Inputs to this process are:

•a luma location ( xTbY, yTbY ) specifying the top-left sample of the current luma transform block relative to the top-left luma sample of the current picture,

•a variable nTbW specifying the width of the current transform block,

•a variable nTbH specifying the height of the current transform block,

•a variable cldx specifying the colour component of the current block,

•an (nTbW)x(nTbH) array d[ x ][ y ] of scaled transform coefficients with x = 0..nTbW − 1, y = 0..nTbH − 1.

Output of this process is the (nTbW)x(nTbH) array r[ x ][ y ] of residual samples with x = 0..nTbW − 1, y = 0..nTbH − 1.

When lfnst_idx[ xTbY ][ yTbY ] is not equal to 0 and both nTbW and nTbH are greater than or equal to 4, the following applies:

...

•The one-dimensional low frequency non-separable transformation process as specified in clause 8.7.4.2 is invoked with the input length of the scaled transform coefficients nonZeroSize, the transform output length nTrS set equal to nLfnstOutSize, the list of scaled non-zero transform coefficients u[ x ] with x = 0..nonZeroSize − 1, the intra prediction mode for LFNST set selection predModeIntra, and the LFNST index for transform selection in the selected LFNST set ( lfnst_idx[ xTbY ][ yTbY ] − 1) as inputs, and the list v[ x ] with x = 0..nLfnstOutSize − 1 as output.

...

**8.7.4.3 Low frequency non-separable transformation matrix derivation process**

Inputs to this process are:

•a variable nTrS specifying the transform output length,

•a variable predModeIntra specifying the intra prediction mode for LFNST set selection,

•a variable lfnstIdx specifying the LFNST index for transform selection in the selected LFNST set.

Output of this process is the transformation matrix lowFreqTransMatrix.

lfnstIdx is mapped as follows:

lfnstIdx = ( predModeIntra%2 ? lfnstIdx : !lfnstIdx ) + 1

The variable lfnstTrSetIdx is specified in Table 8-16 depending on predModeIntra.

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M-S CHIANG et al.** CE6-related: Simplifications for LFNST. *15. JVET MEETING; 20190703 - 20190712; GOTHENBURG; (THE JOINT VIDEO EXPLORATION TEAM OF ISO/IEC JTC1/ SC29/WG11 AND ITU-T SG.16)*, 25 June 2019 (JVET-O0292)

- Network Models. Handbooks in Operations Research and Management Science. Elsevier, 1995, vol. 7, 135-224